# EUROPÄISCHE PATENTSCHRIFT

(11) **EP 2 488 734 B1**
(45) Veröffentlichungstag und Bekanntmachung des Hinweises auf die Patenterteilung: **14.10.2015**
(21) Anmeldenummer: 10771317.4
(22) Anmeldetag: 25.08.2010
(51) Int. Cl.: F01N 9/00

(54) **VERFAHREN ZUM BETREIBEN EINES PARTIKELFILTERS**
METHOD FOR OPERATING A PARTICLE FILTER
PROCÉDÉ PERMETTANT DE FAIRE FONCTIONNER UN FILTRE À PARTICULES

(30) Priorität: 16.10.2009 DE 102009049624
(43) Veröffentlichungstag der Anmeldung: 22.08.2012
(73) Patentinhaber: Daimler AG, 70327 Stuttgart (DE)
(72) Erfinder: WENNINGER, Günter, 70599 Stuttgart (DE); MEISSNER, Ronny, 73776 Altbach (DE)
(74) Vertreter: JENSEN & SON
(86) Internationale Anmeldenummer: PCT/EP2010/005200
(87) Internationale Veröffentlichungsnummer: WO 2011/044967

(56) Entgegenhaltungen:
- US-A1- 2003 131 593

## Beschreibung

Die Erfindung betrifft ein Verfahren zum Betreiben eines zur Ausfilterung von im Abgas von Kraftfahrzeugverbrennungsmotoren enthaltenen Partikeln vorgesehenen Partikelfilters.

Zum Ausfiltern von Partikeln im Abgas von Kraftfahrzeugverbrennungsmotoren, insbesondere von Dieselmotoren, ist der Einsatz von Partikelfiltern gebräuchlich. Häufige Verwendung finden wanddurchströmte Partikelfilter in Wabenkörperbauform oder Sintermetallfilter. Derartige Filter ermöglichen im Allgemeinen die Entfernung von 90 % oder mehr der im Abgas enthaltenen Partikelmasse oder Partikelanzahl. Die im Wesentlichen als Rußpartikel im Abgas vorliegenden Partikel werden aufgrund eines Oberflächen- und/oder Tiefenfiltrationseffekts ausgefiltert und sammeln sich mit der Zeit im Partikelfilter an. Dadurch steigt der Strömungswiderstand des Partikelfilters in unerwünschter Weise an, weshalb die angesammelten Rußpartikel von Zeit zu Zeit durch einen Regenerationsvorgang entfernt werden müssen. Dies geschieht üblicherweise durch einen erzwungenen Rußabbrand bei einer erhöhten Temperatur von typischerweise mehr als 600 °C. Das Dokument US2003/0131593 A1 offenbart beispielsweise einen solchen Partikelfilter.

Die Notwendigkeit eines Regenerationsvorgangs durch thermischen Rußabbrand wird meist durch Überwachung des Druckverlustes über dem Partikelfilter oder anhand von Modellberechnungen für die Partikelbeladung des Partikelfilters durchgeführt. Insbesondere bei Anwendung eines Rechenmodells zur Ermittlung der Partikelbeladung ist es nachteilig, wenn das Verhalten des Partikelfilters in Bezug auf den Wirkungsgrad der Partikelausfilterung, d.h. den Abscheidegrad, sich über die Gebrauchszeit des Partikelfilters verändert. Auch aus Gründen der Betriebssicherheit ist ein sich verändernder Abscheidegrad von Nachteil, insbesondere, wenn er zeitweise geringer als erforderlich bzw. erwünscht ist.

Aufgabe der Erfindung ist es, ein Verfahren zum Betreiben eines zur Ausfilterung von im Abgas von Kraftfahrzeugverbrennungsmotoren enthaltenen Partikeln vorgesehenen Partikelfilters anzugeben, bei welchem die genannten Nachteile vermieden werden.

Diese Aufgabe wird durch ein Verfahren mit den Merkmalen des Anspruchs 1 gelöst.

Bei dem erfindungsgemäßen Verfahren zum Betreiben eines zur Ausfilterung von im Abgas von Kraftfahrzeugverbrennungsmotoren enthaltenen Partikeln vorgesehenen Partikelfilters wird bei einem Neuzustand des Partikelfilters ein Konditionierschritt derart durchgeführt, dass der Abscheidegrad des Partikelfilters für Partikel gegenüber dem im Neuzustand vorhandenen Wert erhöht wird. Wie die Erfinder festgestellt haben, ist in vielen Fällen der Abscheidegrad eines neuen, gebrauchsfähigen Partikelfilters zunächst mehr oder weniger deutlich geringer als wünschenswert und notwendig für eine beim normalen Gebrauch geforderte Partikelausfilterung bzw. Partikelverminderung. Zudem erweist sich der Abscheidegrad als nicht konstant, sondern erhöht sich allmählich bei einem neuen Partikelfilter zu Beginn seiner Gebrauchszeit. Dies ist insofern auch nachteilig, als speziell zu Beginn der Gebrauchszeit vorgeschriebene bzw. angestrebte Partikelverminderungswerte unterschritten werden können. Die zeitliche Drift erschwert zudem eine Abschätzung der Partikelbeladung. Zur Abschätzung bzw. Berechnung der Partikelbeladung vorgesehene Modelle versagen oder liefern ungenaue Ergebnisse. Dies erschwert insbesondere zu Beginn der Gebrauchszeit eine zuverlässige Bestimmung von Regenerationszeitpunkten. Insgesamt erweist sich der Betrieb eines Partikelfilters durch das von den Erfindern festgestellte Phänomen speziell zu Beginn seines Gebrauchs in nachteiliger Weise als unzuverlässig und schwer kalkulierbar. Diese Problematik wird durch das ebenfalls beobachtete, allmählich eintretende Stabilisieren in Bezug auf den Abscheidegrad nicht oder nur unwesentlich entschärft. Infolge des erfindungsgemäß vorgesehenen Konditionierschritts wird das nachteilige Phänomen eines im Neuzustand verminderten und im Laufe der Zeit zunehmenden Abscheidegrads zumindest weitgehend beseitigt.

Es ist vorgesehen, dass der Konditionierschritt bei einem neuen, einsatzbereiten Partikelfilter vor dessen bestimmungsgemäßen Gebrauch mit der üblicherweise vorgesehenen Betriebsweise vorgenommen wird. Vor Durchführung des Konditionierschritts ist der Fertigungsprozess für den Partikelfilter abgeschlossen und der Partikelfilter liegt bereit für seinen Einsatz im Fahrzeug zur Ausfilterung von Partikeln. Gleichwohl kann sich der Konditionierschritt vor Inbetriebnahme des Partikelfilters an den Fertigungsprozess anschließen. Es ist vorgesehen, dass nach Abschluss des Konditionierschrittes der Abscheidegrad von einem niedrigeren Anfangswert auf mehr 70 %, bevorzugt auf mehr als 90 % und besonders bevorzugt auf mehr als 97 % bezogen auf die Partikelmasse oder die Partikelanzahl der Ausfilterung von Partikeln beim bestimmungsgemäßen normalen Gebrauch des Partikelfilters erhöht ist. Dabei ist es insbesondere vorgesehen, dass der Konditionierschritt derart vorgenommen wird, dass der Abscheidegrad des Partikelfilters nach Abschluss des Konditionierschrittes beim anschließenden bestimmungsgemäßen Gebrauch im Wesentlich konstant oberhalb eines gegenüber dem Anfangswert erhöhten Schwellenwerts bleibt.

Die Erfindung ist mit Vorteil anwendbar auf offenporige oder geschlossenporige Filter mit überwiegend Oberflächen- oder Tiefenfiltrationswirkung. Insbesondere ist die Erfindung anwendbar auf wanddurchströmte Partikelfilter in Wabenkörperbauform. Bei diesen Partikelfiltern resultiert eine durch endseitigen Verschluss von langgestreckten Einströmkanälen zwangsweise herbeigeführte Durchströmung der porösen Kanalwände in einem Filtrationseffekt. In besonders vorteilhafter Weise ist die Erfindung anwendbar auf solche so genannten wall-flow-Filtertypen auf Basis Siliziumcarbid, Cordierit- und/oder Aluminiumtitanat. Die Erfindung ist jedoch auch anwendbar auf andere Filtertypen, wie beispielsweise schaumartige Filter auf Keramik- oder Metallbasis oder auf Sintermetallfilter.

Der Konditionierschritt zu Erhöhung und Stabilisierung des Abscheidegrads wird erfindungsgemäß bei im Neuzustand vorliegenden Partikelfiltern vorgenommen. Unter einem Neuzustand ist hier ein Zustand des Partikelfilters nach Abschluss des eigentlichen Fertigungsprozesses, nach welchem der Partikelfilter in gebrauchsfähiger Form vorliegt, zu verstehen. Als Neuzustand soll auch ein Zustand verstanden werden, in welchem der Partikelfilter nach Abschluss eines Reinigungsprozesses zur Entfernung von sich im Laufe einer längeren Gebrauchszeit angesammelten Ascheablagerungen vorliegt.

Der Konditionierschritt wird erfindungsgemäß für einen solcherart vorliegenden Partikelfilter vor seinem in üblicher Betriebsweise vorgesehenen Einsatz vorgenommen. Bei diesem bestimmungsgemäßen Einsatz dient der Partikelfilter bei im Kraftfahrzeug eingebauten und an einen entsprechenden Verbrennungsmotor angeschlossenen Zustand zur Filterung von Abgasen des Motors. Diese weisen einen motor- und/oder betriebspunktabhängigen Partikelgehalt von typischerweise 0,1 g bis 3 g je km Fahrstrecke bzw. etwa 1 mg bis 100 mg je m³ Abgas auf. Dabei weisen die Partikel bei einer Anzahl von etwa 10⁶ bis 10⁸ je cm³ Abgas typischerweise einen mittleren aerodynamischen Durchmesser von 50 nm bis 120 nm auf. Als Partikel sind dabei Feststoffpartikel zu verstehen. Die vorstehend genannten Werte in Bezug auf Abscheidegrade im bestimmungsgemäßen üblichen Einsatz des Partikelfilters beziehen sich auf diese Verhältnisse.

In Ausgestaltung der Erfindung umfasst der Konditionierschritt ein Durchleiten von partikelhaltigem Gas durch den Partikelfilter derart, dass wenigstens ein Teil der im Gas enthaltenen Partikel vom Partikelfilter ausgefiltert und im Partikelfilter gespeichert wird. Bevorzugt weist das partikelhaltige Gas im Wesentlichen Partikel in einer Größenverteilung auf, wie sie auch beim bestimmungsgemäßen Gebrauch des Partikelfilters zur Filterung von Motorenabgas anzutreffen sind. Dabei ist es bevorzugt vorgesehen, dass der Partikelfilter mit einem Gas beaufschlagt wird, welches ein gegenüber dem im normalen Betrieb anzutreffenden Wert erhöhten Partikelgehalt aufweist. Der Partikelfilter wird somit bei Durchführung der Konditionierung in einer partikelreichen Sonderbetriebsart betrieben.

In weiterer Ausgestaltung der Erfindung erfolgt der Konditionierschritt bei an den Verbrennungsmotor angeschlossenem Zustand des Partikelfilters. Der Konditionierschritt wird bevorzugt vor oder auch unmittelbar nach einer Auslieferung des entsprechenden Fahrzeugs an den Kunden durchgeführt. Insbesondere kann vorgesehen sein, den Konditionierschritt vor dem normalen Fahrbetrieb des entsprechenden Fahrzeugs durchzuführen. Ebenfalls möglich ist die Durchführung des Konditionierschritts im Anschluss an einen Einbau eines in einem separaten Aschereinigungsprozess gereinigten Partikelfilters in die Abgasanlage bzw. ins Fahrzeug. Im Falle einer Durchführung des Konditionierschritts nach Fahrzeugauslieferung wird dies bevorzugt durch entsprechende Programmierung eines Motorsteuergeräts realisiert. Dieses ist vorzugsweise so programmiert, dass der Motorbetrieb für eine vorgegebene Anfangslaufstrecke derart modifiziert ist, dass die Konditionierung durchgeführt wird.

Insbesondere bei Durchführung des Konditionierschritts bei an den Verbrennungsmotor angeschlossenem Zustand ist in weiterer Ausgestaltung der Erfindung vorgesehen, dass bei Durchführung des Konditionierschrittes der Verbrennungsmotor wenigstens zeitweise derart betrieben wird, dass das vom Verbrennungsmotor abgegebene Abgas einen im Vergleich zum normalen Betrieb erhöhten Partikelgehalt aufweist. Bevorzugt ist der Partikelgehalt des Abgases etwa um den Faktor 1,1 bis 10, besonders bevorzugt um den Faktor 1,5 bis 5 gegenüber dem normalen Betrieb erhöht. Insbesondere ist in weiterer Ausgestaltung der Erfindung vorgesehen, dass bei Durchführung des Konditionierschrittes der Verbrennungsmotor derart betrieben wird, dass das vom Verbrennungsmotor abgegebene Abgas einen Partikelgehalt von mehr als 0,01 g je m³ oder eine Partikelanzahl von mehr als 5x10⁷ je cm³ Abgas aufweist. Damit kann der Konditionierschritt in vergleichsweise kurzer Zeit durchgeführt und abgeschlossen werden. Die Einstellung eines erhöhten Partikelgehalts kann dabei durch die Anzahl der und/oder die Zeitpunkte der Kraftstoffeinspritzungen in dem gewünschten Sinne beeinflusst werden. Zusätzlich oder alternativ können Abgasrückführungsrate, Ladedruck eines Turboladers, Öl- oder Kühlmitteltemperatur derart beeinflusst werden, dass ein erhöhter Partikelgehalt im Abgas auftritt. Der Einspritzbeginn einer Kraftstoffhaupteinspritzung wird bevorzugt um etwa 10 Grad Kurbelwinkel nach spät verlegt. Die Abgasrückführrate wird bevorzugt um mehr als 1 %, besonders bevorzugt um mehr als 5 % erhöht. Zur Erhöhung des Partikelgehalts kann eine Ladedruckabsenkung um bevorzugt mehr als 5 % gegenüber dem normalerweise eingestellten Wert vorgesehen sein. Weiterhin können, bevorzugt lediglich für die Durchführung des Konditionierschrittes, partikelbildende Zusätze dem Kraftstoff und/oder dem Motorenöl zugesetzt sein.

In weiterer Ausgestaltung der Erfindung ist vorgesehen, dass zur Durchführung des Konditionierschritts der Partikelfilter an eine fahrzeugexterne Konditioniervorrichtung angeschlossen wird. Der Partikelfilter kann dabei in der Abgasanlage des Fahrzeugs angeordnet sein. Der Konditionierschritt kann jedoch auch an einem außerhalb des Fahrzeugs angeordneten Partikelfilter vorgenommen werden. Zur Durchführung des Konditionierschritts wird der Partikelfilter beispielsweise an einen Flüssig-, Gas- oder Feststoffbrenner oder an einen Rußgenerator oder einen Partikelgenerator angeschlossen, welcher ein entsprechend gewünschtes Größenspektrum von Partikeln erzeugt. Damit steht bei Auslieferung des Fahrzeugs oder nach Einbau eines gereinigten bzw. getauschten Partikelfilters ein Partikelfilter zur Verfügung, welcher sofort über einen stabil hohen Partikel-Abscheidegrad verfügt.

In weiterer Ausgestaltung der Erfindung ist vorgesehen, dass bei Durchführung des Konditionierschrittes partikelhaltiges Gas eine vorgebbare Zeitspanne durch den Partikelfilter geleitet wird. Die Durchführung des Konditionierschritts ist somit auf eine vorgegebene Zeitspanne begrenzt. Die vorgegebene Zeitspanne beträgt bevorzugt weniger als eine Stunde, besonders bevorzugt weniger als 20 Minuten.

In weiterer Ausgestaltung der Erfindung ist vorgesehen, dass bei der Durchführung des Konditionierschritts ein partikelhaltiges Gas mit Partikeln mit einem aerodynamischen Durchmesser von im Mittel weniger als 0,1 mm durch den Partikelfilter geleitet wird. Insbesondere ist vorgesehen, dass das partikelhaltige Gas Partikel mit einem im Wesentlichen geringeren Durchmesser als 100 nm aufweist. Wie nachgewiesen werden konnte, lässt sich mit einem solchen partikelhaltigen Gas eine besonders wirksame Erhöhung bzw. Stabilisierung des Abscheidegrads erzielen.

In weiterer Ausgestaltung der Erfindung ist vorgesehen, dass nach Durchführung des Konditionierschritts eine Partikelmenge von mehr als 10 mg je Liter Partikelfiltervolumen vom Partikelfilter ausgefiltert und im Partikelfilter gespeichert ist. Bevorzugt ist es, dass nach Durchführung des Konditionierschritts eine Partikelmenge von mehr als 100 mg je Liter Partikelfiltervolumen, besonders bevorzugt mehr als 500 mg je Liter vom Partikelfilter ausgefiltert und im Partikelfilter gespeichert ist. Wie nachgewiesen werden konnte, lässt sich dadurch eine besonders wirksame Erhöhung bzw. Stabilisierung des Abscheidegrads erzielen.

In weiterer Ausgestaltung der Erfindung ist vorgesehen, dass bei der Durchführung des Konditionierschritts ein partikelhaltiges Gas derart eingesetzt wird, dass die im Partikelfilter gespeicherten Partikel während dem bestimmungsgemäßen Einsatz des Partikelfilters im Wesentlichen entfernt werden können. Bevorzugt handelt es sich um Partikel, welche anschließend beim Gebrauch des Partikelfilters beispielsweise durch Aufheizen auf bevorzugt über 250 °C und/oder durch Reaktion mit im Motorenabgas enthaltenen Bestandteilen zu flüchtigen Produkten entfernt werden können. Es können Feststoffpartikel eingesetzt werden, welche sich beispielsweise durch Sublimation verflüchtigen können. Es können auch Feststoffpartikel eingesetzt werden, welche sich beim bestimmungsgemäßen Gebrauch des Partikelfilters, beispielsweise unter Einwirkung einer erhöhten Temperatur, thermisch zersetzen, wobei die Zersetzungsprodukte entfernbar sind. Es kann jedoch auf den Einsatz von wieder aus dem Partikelfilter entfernbaren Partikeln verzichtet werden, wenn diese so gewählt werden, dass sie den normalen Betrieb des Partikelfilters durch ihre bleibende Anwesenheit im Partikelfilter nicht beeinträchtigen. Die Partikel können aus Feststoffen eines oder mehrerer der Elemente C, H, Al, Si, Ti, Fe, Cu, Pt, Pd, Ce, S, O, N, P, Zn, Ca, Na, Li, Ba, Cl, Rh, F gebildet sein. Besonders bevorzugt ist eine anfängliche Beladung des Partikelfilters durch Ruß oder rußähnliche Partikel.

Vorteilhafte Ausführungsformen der Erfindung sind in den Zeichnungen veranschaulicht und werden nachfolgend beschrieben. Dabei sind die vorstehend genannten und nachfolgend noch zu erläuternden Merkmale nicht nur in der jeweils angegebenen Merkmalskombination, sondern auch in anderen Kombinationen oder in Alleinstellung verwendbar, ohne den Rahmen der vorliegenden Erfindung zu verlassen.

Dabei zeigen:
- Fig. 1: eine schematische Darstellung eines Verbrennungsmotors mit angeschlossenem Partikelfilter,
- Fig. 2: eine schematische Schnitt-Darstellung eines Partikelfilters, bei welchem bevorzugt das erfindungsgemäße Verfahren zum Einsatz kommt und
- Fig. 3: eine schematische Darstellung eines an einen Partikelgenerator angeschlossenen Partikelfilters.

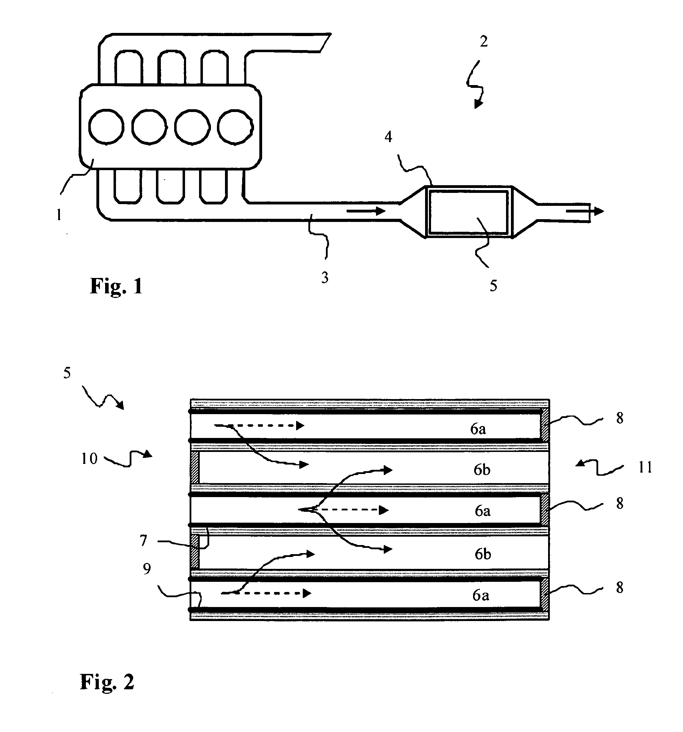

Die schematische Darstellung von Fig. 1 zeigt einen Verbrennungsmotor 1 eines nicht dargestellten Kraftfahrzeugs mit einem angeschlossenen Partikelfilter 5. Der Verbrennungsmotor 1 kann dabei beispielsweise vom Typ eines direkteinspritzenden, stöchiometrisch- oder magerbetriebsfähigen Ottomotors oder eines direkteinspritzenden Dieselmotors mit hier beispielhaft 4 Zylindern sein. Das Abgas des Verbrennungsmotors 1 wird über eine Abgasleitung 3 dem in einem Gehäuse 4 eingebauten Partikelfilter 5 zugeführt, welcher Bestandteil einer Abgasanlage 2 des Verbrennungsmotors 1 ist. Der Übersichtlichkeit halber sind weitere Komponenten, welche zum Betrieb des Verbrennungsmotors 1 und der Abgasanlage 2 vorgesehen sind oder vorgesehen sein können, nicht eingezeichnet. Es versteht sich jedoch, dass die Abgasanlage 2 weitere Bauteile, wie beispielsweise Sensoren und Katalysatoren aufweisen kann, welche dem Partikelfilter 5 vor- und/oder nachgeschaltet sein können.

Der Verbrennungsmotor 1 ist dabei derart ausgebildet, dass er typischerweise ein Abgas mit einem Partikelgehalt von bis zu 5 g je km Fahrstrecke des zugehörigen Kraftfahrzeugs bzw. etwa 50 mg je m³ Abgas abgibt. Typischerweise ist eine Größenverteilung der im Wesentlichen als Rußpartikel vorliegenden Feststoffpartikel vorhanden, welches ein Maximum bei einem aerodynamischen Durchmesser von etwa 80 nm aufweist.

In Fig. 2 ist eine bevorzugte Ausführungsform des eingesetzten Partikelfilters 5 schematisch im Längsschnitt dargestellt. Der Partikelfilter 5 ist als so genannter wall-flow-Partikelfilter mit sich von einer stirnseitigen Eintrittsseite 10 zu einer gegenüberliegenden stirnseitigen Austrittseite 11 erstreckenden schlanken und gerade verlaufenden Strömungskanälen 6a, 6b ausgebildet. Dabei sind der Übersichtlichkeit halber nur einige einer Vielzahl von Strömungskanälen 6a, 6b dargestellt. Die Strömungskanäle 6a, 6b verlaufen parallel zueinander, wobei benachbarte Strömungskanäle durch poröse, gasdurchlässige Wände 7 voneinander getrennt sind. Die Dicke der Wände 7 liegt bevorzugt im Bereich von 0,2 mm und 0,4 mm. Die Porosität liegt bevorzugt zwischen 30 % und 70 %, wobei eine mittlere Porengröße zwischen 1 µm und 50 µm bevorzugt ist. Die Erfindung hat sich als besonders vorteilhaft bei Partikelfiltern mit einer Porengröße der Wände von im Mittel 20 µm und weniger und mit einer Porosität von mehr als 40 % erwiesen. Die Wände 7 sind vorzugsweise durchgehend gleichartig porös ausgebildet.

Die Strömungskanäle 6a, 6b weisen vorliegend einen über ihre Länge gleichbleibenden, quadratischen Querschnitt auf, wobei andere Querschnittsformen ebenfalls möglich sind. In einer nicht dargestellten Draufsicht auf die Eintrittsseite 10 oder die Austrittsseite 11 ergibt sich dabei ein Bild von Zellen, wobei die Zelldichte bevorzugt zwischen 100 cpsi (cells per square inch) und 400 cpsi liegt. Besonders bevorzugt ist eine Zelldichte von ca. 300 cpsi entsprechend etwa 47 Zellen je cm².

Der Partikelfilter 5 weist eine zylindrische Form mit einem vorzugsweise über die Länge gleichbleibenden quadratischen Querschnitt auf, wobei andere Querschnittsformen natürlich möglich sind. Weiterhin kann der Partikelfilter 5 auch aus einer Mehrzahl von in Reihen und Spalten angeordneten gleichartigen Segmenten entsprechend der in Fig. 2 dargestellten Form aufgebaut sein, wobei die Segmente aneinander anliegen und vorzugsweise mit einem keramischen Kleber verbunden sind.

Die Strömungskanäle 6a, 6b sind wechselseitig an der Eintrittsseite 10 und der Austrittsseite 11 mit einem gasundurchlässigen Verschlussstopfen 8 versehen. Abgesehen vom Verschlussstopfen 8 sind sie über ihren sonstigen axialen Verlauf gesehen frei durchströmbar ausgebildet. An der Eintrittsseite 10 unverschlossene, offene Strömungskanäle bilden Eintrittskanäle 6a und an der Austrittsseite 11 unverschlossene, offene Strömungskanäle bilden Austrittskanäle 6b. Infolge des austrittsseitigen Verschlusses der Eintrittskanäle 6a durch einen jeweiligen Verschlussstopfen 8 strömt in die Eintrittskanäle 6a eintretendes Abgas durch die porösen Kanalwände 7, wobei im Abgas enthaltene Partikel ausgefiltert werden.

Es ist vorzugsweise vorgesehen, dass eine katalytische wirksame Beschichtung 9 auf die Wände 7 einiger oder aller Strömungskanäle 6a, 6b aufgebracht ist. In dem in Fig. 2 dargestellten Fall ist die katalytische Beschichtung 9 beispielhaft lediglich auf den Wänden 7 der Eintrittskanäle 6a vorgesehen. Die katalytische Beschichtung 9 ist vorzugsweise durchgehend auf den Wänden 7 der entsprechenden Strömungskanäle vorhanden und selbst gasdurchlässig. Die katalytische Beschichtung 9 kann in der Art einer Dreiwege-Katalysatorbeschichtung, einer oxidationskatalytisch wirksamen Beschichtung, einer in Bezug auf eine Stickoxidverminderung selektiv wirksamen SCR-Katalysatorbeschichtung oder in der Art einer Stickoxid-Speicherkatalysatorbeschichtung in ihrer dem Fachmann geläufigen, jeweiligen üblichen Bedeutung und Ausprägung ausgebildet sein. Dabei kann auch eine radiale Schichtung von unterschiedlichen Beschichtungsformen vorteilhaft sein, wodurch eine kombinierte Wirkung ermöglicht ist. Beispielsweise kann eine Stickoxid-Speicherkatalysatorbeschichtung auf einer SCR-Katalysatorbeschichtung oder umgekehrt eine SCR-Katalysatorbeschichtung auf einer Stickoxid-Speicherkatalysatorbeschichtung aufgebracht sein. Ebenfalls möglich ist eine in axialer Richtung abschnittsweise unterschiedlich ausgebildete Beschichtung. Auf diese Weise wird ein Abgasreinigungsbauteil mit kombinierter katalytischer und filterwirksamer Funktion gebildet.

Nachfolgend wird davon ausgegangen, dass ein fabrikneuer oder ein frisch in einem Aschereinigungsprozess gereinigter gebrauchsfertiger Partikelfilter 5 vorliegt. Weiterhin wird davon ausgegangen, dass der Partikelfilter 5 in dem vorliegenden Neuzustand ein Partikel-Abscheidegrad von weniger als 70 % bezogen auf die Partikelmasse und/oder die Partikelanzahl des typischerweise vom Verbrennungsmotor 1 abgegebenem und den Partikelfilter 5 durchströmenden Abgases aufweist. Es ist jedoch nicht ungewöhnlich, dass bei einem neuen Partikelfilter nach Abschluss des Fertigungsprozesses noch weitaus geringere Abscheidgrade von 50 % oder weniger vorhanden sind. In diesen Fällen erweist sich die Erfindung als ganz besonders vorteilhaft, da solch niedrige Abscheidegrade eine untolerierbar hohe Partikelemission wenigstens zu Beginn des Partikelfiltergebrauchs zur Folge haben. Um diesen typischerweise im Neuzustand gegenüber dem erforderlichen und erwünschten Wert mehr oder weniger stark verminderten Abscheidegrad zu erhöhen, ist erfindungsgemäß ein Konditionierschritt vorgesehen. Vorliegend erfolgt der Konditionierschritt dadurch, dass dem neuen Partikelfilter 5 in dem in Fig. 1 dargestellten eingebauten Zustand vom Verbrennungsmotor 1 vorübergehend ein Abgas zugeführt wird, welches einen Partikelgehalt aufweist, der gegenüber dem normalerweise vorhandenen Wert erhöht ist. Bevorzugt ist der Partikelgehalt um etwa das Zweifache bis Fünffache gegenüber dem normalen Wert erhöht. Dabei ist die Größenverteilung der vom Verbrennungsmotor 1 abgegebenen Partikel bevorzugt im Wesentlichen gegenüber dem normalen Wert unverändert. Hierzu wird der Verbrennungsmotor 1 vorrübergehend in einem partikelreichen Verbrennungsmodus betrieben. Der partikelreiche Verbrennungsbetrieb wird bevorzugt solange aufrechterhalten, bis der Abscheidegrad des Partikelfilters 5 auf einen vorgebbaren Wert von mehr als 70 %, bevorzugt mehr als 90 % und besonders bevorzugt mehr als 97 % angestiegen ist. Die entsprechende erforderliche Zeitspanne kann durch Versuche vorab empirisch ermittelt und dementsprechend festgelegt sein. Die festgelegte Zeitspanne kann auch durch die Masse der vom Partikelfilter 5 ausgefilterten Partikel festgelegt sein. Typischerweise ist es ausreichend, den Konditioniervorgang solange durchzuführen, bis etwa 0,1 g bis 1, 0 g Partikel je Liter Partikelfiltervolumen im Partikelfilter 5 gespeichert sind.

Nachdem der gewünschte Abscheidegrad infolge der Beaufschlagung mit vergleichsweise partikelreichem Abgas erreicht ist, wird die Beaufschlagung des Partikelfilters 5 mit Abgas vorzugsweise beendet. Der Konditionierschritt ist damit abgeschlossen und der Verbrennungsmotor 1 wird in anschließenden Betriebsphasen wieder normal betrieben. Es kann auch vorgesehen sein, direkt im Anschluss an den Konditionierschritt oder sobald als möglich nach Beendigung des Konditionierschrittes eine erzwungene Partikelfilterregeneration durch thermischen Rußabbrand durchzuführen. Wie festgestellt wurde, ist auch nach einer thermischen Partikelfilterregeneration, bei welchem die zuvor im Konditionierschritt im Wesentlichen in Form von Ruß in den Partikelfilter 5 eingebrachten Partikel wieder wenigstens größtenteils entfernt werden, der erhöhte Partikel-Abscheidegrad wenigstens annähernd vorhanden.

Die beschriebene Vorgehensweise zur Konditionierung des Partikelfilters 5 kann vor einer Auslieferung eines fabrikneuen Fahrzeugs oder eines Fahrzeugs mit einem beispielsweise durch Tausch eingesetzten neuen Partikelfilters vorgenommen werden. Bevorzugt wird die Konditionierung in einer hierzu vorgesehenen Werkstatt vorgenommen. Es kann auch vorgesehen sein, den Konditionierschritt direkt im Anschluss an eine Auslieferung des Fahrzeugs im Fahrbetrieb vorzunehmen. Dies wird bevorzugt durch einen von einem Motorsteuergerät programmierten Ablauf automatisiert vorgenommen. Es kann vorgesehen sein, den Konditionierschritt im Anschluss an den ersten Start oder einer der ersten Starts des Verbrennungsmotors 1 nach Fahrzeugauslieferung an den entsprechenden Benutzer durchzuführen. Dabei ist bevorzugt vorgesehen, den Konditionierschritt innerhalb einer möglichst zusammenhängenden Fahrstrecke von ca. 10 km durchzuführen.

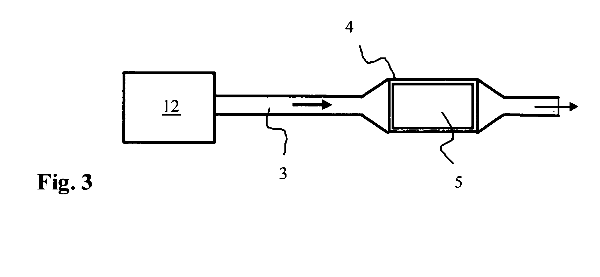

Wie in Fig. 3 schematisch dargestellt, kann der Konditionierschritt auch bei einem an einen fahrzeugexternen Partikelgenerator 12 angeschlossenen Partikelfilter 5 vorgenommen werden. Der Partikelgenerator 12 kann beispielsweise als Flüssig-, Gas- oder Feststoffbrenner oder als Rußgenerator ausgebildet sein. Es ist bevorzugt vorgesehen, den Partikelfilter 5 im Neuzustand vor Einbau ins Fahrzeug mit partikelhaltigem Gas des Partikelgenerators 12 zu beaufschlagen. Der Partikelgenerator liefert bevorzugt ein partikelhaltiges Gas mit einem Partikelgrößenspektrum ähnlich dem eines Verbrennungsmotors wie oben anhand Fig. 1 erläutert. Der Konditionierschritt wird bevorzugt außerhalb des Fahrzeugs im Anschluss an den Fertigungsprozess des Partikelfilters 5 oder einen Reinigungsprozess vorgenommen. Der Konditionierschritt wird analog wie oben bei einem im Fahrzeug eingebauten Zustand des Partikelfilters beendet, wenn der Abscheidegrad auf den gewünschten Wert angestiegen ist, bzw. eine hierfür ausreichende Partikelmenge im Partikelfilter 5 eingelagert ist. Insbesondere im Falle einer Beaufschlagung mit Rußpartikeln kann sich an den Konditionierschritt ein Regenerationsvorgang mit thermischem Rußabbrand anschließen. Der solcherart vorkonditionierte Partikelfilter 5 wird sodann ins Fahrzeug eingebaut und dieses seinem bestimmungsgemäßen Betrieb übergeben.

## Patentansprüche

1. Verfahren zum Betreiben eines zur Ausfilterung von im Abgas von Kraftfahrzeugverbrennungsmotoren enthaltenen Partikeln vorgesehenen Partikelfilters (5), bei welchem bei einem Neuzustand des Partikelfilters (5) ein Konditionierschritt durchgeführt wird, wobei der Konditionierschritt derart durchgeführt wird, dass der Abscheidegrad des Partikelfilters (5) für Partikel gegenüber dem im Neuzustand vorhandenen Anfangswert erhöht wird und nach Abschluss des Konditionierschritts beim anschließenden bestimmungsgemäßen Gebrauch des Partikelfilters im Wesentlichen konstant oberhalb eines gegenüber dem Anfangswert erhöhten Schwellenwerts bleibt, wobei zur Durchführung des Konditionierschritts
- der Verbrennungsmotor wenigstens zeitweise derart betrieben wird, dass das vom Verbrennungsmotor abgegebene Abgas einen im Vergleich zum normalen Betrieb erhöhten Partikelgehalt aufweist oder
- der Partikelfilter (5) an eine fahrzeugexterne Konditioniervorrichtung angeschlossen wird.

2. Verfahren nach Anspruch 1,
**dadurch gekennzeichnet, dass**
der Motorbetrieb zur Durchführung des Konditionierschritts für eine vorgegebene Anfangslaufstrecke des im Fahrzeug eingebauten Partikelfilters (5) derart modifiziert wird, dass das vom Verbrennungsmotor (1) abgegebene Abgas einen Partikelgehalt von mehr als 0,01 g je m³ aufweist.

3. Verfahren nach Anspruch 1 oder 2,
**dadurch gekennzeichnet, dass**
bei im Fahrzeug eingebautem Partikelfilter (5) zur Einstellung des erhöhten Partikelgehalts die Anzahl und/oder die Zeitpunkte der Kraftstoffeinspritzungen modifiziert werden.

4. Verfahren nach einem der Ansprüche 1 bis 3,
**dadurch gekennzeichnet, dass**
bei im Fahrzeug eingebautem Partikelfilter (5) zur Einstellung des erhöhten Partikelgehalts eine Abgasrückführrate und/oder ein Ladedruck eines Abgasturboladers modifiziert werden.

5. Verfahren nach einem der Ansprüche 1 bis 4,
**dadurch gekennzeichnet, dass**
bei im Fahrzeug eingebautem Partikelfilter (5) der Konditionierschritt im Anschluss an den ersten Start oder einer der ersten Starts des Verbrennungsmotors 1 nach Fahrzeugauslieferung an einen Benutzer vorgenommen wird.

6. Verfahren nach einem der Ansprüche 1 bis 5,
**dadurch gekennzeichnet, dass**
bei im Fahrzeug eingebautem Partikelfilter (5) der Konditionierschritt innerhalb einer Fahrstrecke von ca. 10 km durchgeführt wird.

7. Verfahren nach einem der Ansprüche 1 bis 6,
**dadurch gekennzeichnet, dass**
nach Durchführung des Konditionierschritts eine Partikelmenge von mehr als 10 mg je Liter Partikelfiltervolumen vom Partikelfilter (5) ausgefiltert und im Partikelfilter (5) gespeichert ist.

8. Verfahren nach einem der Ansprüche 1 bis 7,
**dadurch gekennzeichnet, dass**
der Konditionierschritt beendet wird, wenn etwa 1 Gramm Partikel je Liter Partikelfiltervolumen im Partikelfilter (5) gespeichert sind.

9. Verfahren nach einem der Ansprüche 1 bis 8,
**dadurch gekennzeichnet, dass**
nach Abschluss des Konditionierschritts der Abscheidegrad des Partikelfilters (5) auf mehr als 97 % bezogen auf die Partikelmasse oder die Partikelanzahl der Ausfilterung von Partikeln beim bestimmungsgemäßen normalen Gebrauch des Partikelfilters (5) erhöht ist.

10. Verfahren nach einem der Ansprüche 1 bis 9,
**dadurch gekennzeichnet, dass**
bei Durchführung des Konditionierschrittes partikelhaltiges Gas eine vorgebbare Zeitspanne durch den Partikelfilter (5) geleitet wird.

11. Verfahren nach einem der Ansprüche 1 bis 10,
**dadurch gekennzeichnet, dass**
bei der Durchführung des Konditionierschritts ein partikelhaltiges Gas mit Partikeln mit einem aerodynamischen Durchmesser von im Mittel weniger als 0,1 mm durch den Partikelfilter (5) geleitet wird.

12. Verfahren nach einem der Ansprüche 1 bis 11,
**dadurch gekennzeichnet, dass**
bei der Durchführung des Konditionierschritts ein partikelhaltiges Gas derart eingesetzt wird, dass die im Partikelfilter (5) gespeicherten Partikel während dem bestimmungsgemäßen Einsatz des Partikelfilters (5) im Wesentlichen entfernt werden können.

13. Verfahren nach einem der Ansprüche 1 oder 7 bis 12,
**dadurch gekennzeichnet, dass**
bei Durchführung des Konditionierschritts mit einem an eine fahrzeugexterne Konditioniervorrichtung angeschlossenen Partikelfilter (5) der Partikelfilter (5) in einer Abgasanlage des Fahrzeugs angeordnet ist.

14. Verfahren nach einem der Ansprüche 1 oder 7 bis 12,
**dadurch gekennzeichnet, dass**
bei Durchführung des Konditionierschritts mit einem an eine fahrzeugexterne Konditioniervorrichtung angeschlossenen Partikelfilter (5) der Partikelfilter (5) außerhalb des Fahrzeugs angeordnet ist.

## Claims

1. Method for operating a particulate filter (5) provided for filtering out particulates contained in the exhaust gas of motor vehicle internal combustion engines, in which method a conditioning step is carried out in a new condition of the particulate filter (5), wherein the conditioning step is carried out in such a way that the particulate removal rate of the particulate filter (5) is increased compared to the initial value prevailing in the new condition and remains, on completion of the conditioning step, in the subsequent intended use of the particulate filter substantially constantly above a threshold value increased compared to the initial value, wherein, for carrying out the conditioning step,
- the internal combustion engine is at least temporarily operated such that the exhaust gas emitted by the internal combustion engine has a higher particulate content compared to normal operation, or
- the particulate filter (5) is connected to a conditioning device external to the vehicle.

2. Method according to claim 1,
**characterised in that**
for carrying out the conditioning step, the engine operation is, for a preset initial running period of the particulate filter (5) installed into the vehicle, modified in such a way that the exhaust gas emitted by the internal combustion engine (1) has a particulate content of more than 0.01 g _{/} m³.

3. Method according to claim 1 or 2,
**characterised in that**
for setting the increased particulate content in the installed state of the particulate filter (5), the number and/or the times of the fuel injections is/are modified.

4. Method according to any of claims 1 to 3,
**characterised in that**
for setting the increased particulate content in the installed state of the particulate filter (5), an exhaust gas recirculation rate and/or a boost pressure of a turbocharger is/are modified.

5. Method according to any of claims 1 to 4,
**characterised in that**
in the installed state of the particulate filter (5), the conditioning step is carried out following the first start or one of the first starts of the internal combustion engine after the vehicle has been delivered to a user.

6. Method according to any of claims 1 to 5,
**characterised in that**
in the installed state of the particulate filter (5), the conditioning step is carried out within a driving distance of approximately 10 km.

7. Method according to any of claims 1 to 6,
**characterised in that**
following the conditioning step, a particulate quantity of more than 10 mg per litre of particulate filter volume is filtered out by the particulate filter (5) and stored in the particulate filter (5).

8. Method according to any of claims 1 to 7,
**characterised in that**
the conditioning step is terminated when approximately 1 gram of particulate per litre of particulate filter volume is stored in the particulate filter (5).

9. Method according to any of claims 1 to 8,
**characterised in that**
following the termination of the conditioning step, the removal rate of the particulate filter (5) is increased yp more than 97% with reference to the particulate mass or the particulate number filtered out in the intended normal use of the particulate filter (5).

10. Method according to any of claims 1 to 9,
**characterised in that**
in carrying out the conditioning step, gas containing particulate is directed through the particulate filter (5) for a presettable period of time.

11. Method according to any of claims 1 to 10,
**characterised in that**
in carrying out the conditioning step, a gas containing particulates with particles having an average aerodynamic diameter of less than 0.1 mm is directed through the particulate filter (5).

12. Method according to any of claims 1 to 11,
**characterised in that**
in carrying out the conditioning step, a gas containing particulate is used in such a way that the particulates stored in the particulate filter (5) can be substantially removed during the intended use of the particulate filter (5).

13. Method according to any of claims 1 or 7 to 12,
**characterised in that**
in carrying out the conditioning step with a particulate filter (5) connected to a conditioning device external to the vehicle, the particulate filter (5) is located in an exhaust system of the vehicle.

14. Method according to any of claims 1 or 7 to 12,
**characterised in that**
in carrying out the conditioning step with a particulate filter (5) connected to a conditioning device external to the vehicle, the particulate filter (5) is located outside the vehicle.

## Revendications

1. Procédé de fonctionnement d'un filtre à particules (5) destiné à extraire par filtrage les particules contenues dans les gaz d'échappement de moteurs à combustion interne de véhicule automobile, selon lequel lors d'un nouvel état du filtre à particules (5) une étape de conditionnement est réalisée, l'étape de conditionnement étant réalisée de telle manière que le degré de séparation du filtre à particules (5) pour les particules par rapport à la valeur de départ présente dans le nouvel état soit augmenté et à l'issu de l'étape de conditionnement lors d'une utilisation conforme du filtre à particules demeure sensiblement constant au-dessus d'une valeur seuil accrue par rapport à la valeur de départ, lors de l'exécution de l'étape de conditionnement le moteur à combustion interne fonctionnant au moins en partie de telle manière que le gaz d'échappement évacué par le moteur à combustion interne présente une teneur en particule accrue en comparaison avec celle d'un fonctionnement normal ou le filtre à particules (5) est raccordé à un dispositif de conditionnement externe au véhicule.

2. Procédé selon la revendication 1, **caractérisé en ce que** le fonctionnement du moteur destiné à l'exécution de l'étape de conditionnement pour un trajet de départ défini du filtre à particules (5) monté dans le véhicule automobile est modifié de telle manière que le gaz d'échappement évacué par le moteur à combustion interne (1) présente une teneur en particules supérieure à 0,01 g par m³.

3. Procédé selon la revendication 1 ou 2, **caractérisé en ce que** pour le filtre à particules (5) monté dans le véhicule automobile destiné au réglage de la teneur accrue en particules le nombre et/ou les moments d'injections de carburant sont modifiés.

4. Procédé selon l'une quelconque des revendications 1 à 3, **caractérisé en ce que** pour le filtre à particules (5) monté dans le véhicule automobile destiné au réglage de la teneur accrue en particules, un taux de recirculation de gaz d'échappement et/ou une pression de suralimentation d'un turbocompresseur à gaz d'échappement est modifié(e).

5. Procédé selon l'une quelconque des revendications 1 à 4, **caractérisé en ce que** pour un filtre à particules (5) monté dans le véhicule automobile l'étape de conditionnement est exécutée à la suite du premier démarrage ou d'un parmi le premier démarrage du moteur à combustion interne (1) après la livraison du véhicule à un utilisateur.

6. Procédé selon l'une quelconque des revendications 1 à 5, **caractérisé en ce que** pour un filtre à particules (5) monté dans le véhicule automobile l'étape de conditionnement est effectuée au cours d'un trajet d'environ 10 km.

7. Procédé selon l'une quelconque des revendications 1 à 6, **caractérisé en ce qu'**après l'exécution de l'étape de conditionnement une quantité de particules supérieure à un volume de filtre de particule de 10 mg par litre est filtrée à partir du filtre à particules (5) et stockée dans le filtre à particules (5).

8. Procédé selon l'une quelconque des revendications 1 à 7, **caractérisé en ce que** l'étape de conditionnement s'achève lorsqu'un volume de filtre à particule d'environ 1 gramme de particules par litre est stocké dans le filtre à particules (5).

9. Procédé selon l'une quelconque des revendications 1 à 8, **caractérisé en ce qu'**à l'issu de l'étape de conditionnement le degré de séparation du filtre à particules (5) a augmenté de plus de 97 % par rapport à la masse de particules ou au nombre de particules de l'extraction par filtrage des particules lors d'une utilisation conforme normale du filtre à particules (5).

10. Procédé selon l'une quelconque des revendications 1 à 9, **caractérisé en ce que** lors de l'exécution de l'étape de conditionnement le gaz contenant des particules est conduit pendant une durée prédéfinie à travers le filtre à particules (5).

11. Procédé selon l'une quelconque des revendications 1 à 10, **caractérisé en ce que** lors de l'exécution de l'étape de conditionnement un gaz contenant des particules présentant un diamètre aérodynamique inférieur en moyenne à 0,1 mm est conduit à travers le filtre à particules (5).

12. Procédé selon l'une quelconque des revendications 1 à 11, **caractérisé en ce que** lors de l'exécution de l'étape de conditionnement un gaz contenant des particules est utilisé de telle manière que les particules stockées dans le filtre à particules (5) puissent être sensiblement éliminées pendant l'utilisation conforme du filtre à particules (5).

13. Procédé selon l'une quelconque des revendications 1 ou 7 à 12, **caractérisé en ce que** lors de l'exécution de l'étape de conditionnement à l'aide d'un filtre à particules (5) raccordé à un dispositif de conditionnement externe au véhicule, le filtre à particules (5) est disposé dans une installation de gaz d'échappement du véhicule automobile.

14. Procédé selon l'une quelconque des revendications 1 ou 7 à 12, **caractérisé en ce que** lors de l'exécution de l'étape de conditionnement à l'aide d'un filtre à particules (5) raccordé à un dispositif de conditionnement externe au véhicule, le filtre à particules (5) est disposé à l'extérieur du véhicule.
